# EUROPÄISCHE PATENTSCHRIFT

(11) **EP 0 666 002 B1**
(45) Veröffentlichungstag und Bekanntmachung des Hinweises auf die Patenterteilung: **17.04.1996**
(21) Anmeldenummer: 93922941.5
(22) Anmeldetag: 12.10.1993
(51) Int. Cl.: H04B 7/08

(54) **VERFAHREN UND ANORDNUNG ZUR ANTENNENAUSWAHL-DIVERSITY IN EINER EMPFANGSEINRICHTUNG EINES SCHNURLOSEN TELEFONSYSTEMS**
METHOD AND INSTALLATION FOR ANTENNA-SELECTION DIVERSITY IN A WIRELESS TELEPHONE RECEIVER
PROCEDE ET AGENCEMENT VISANT A LA SELECTION D'ANTENNES EN DIVERSITE DANS UN RECEPTEUR D'UN SYSTEME TELEPHONIQUE SANS FIL

(30) Priorität: 26.10.1992 EP 92118259
(43) Veröffentlichungstag der Anmeldung: 09.08.1995
(73) Patentinhaber: SIEMENS AKTIENGESELLSCHAFT, D-80333 München (DE)
(72) Erfinder: EUSCHER, Christoph, D-46414 Rhede (DE); PILLEKAMP, Klaus-Dieter, D-40699 Erkrath (DE)
(86) Internationale Anmeldenummer: EP9302807
(87) Internationale Veröffentlichungsnummer: WO9410764

(56) Entgegenhaltungen:
- PROCEEDINGS OF GLOBECOM 90 2-5 December 1990, NEW YORK (US) pages 1013-1017; L.B.LOPES
- PROCEEDINGS OF 1991 INTERNATIONAL CONFERENCE ON COMMUNICATIONS - ICC 91 23-26 June 1991, NEW YORK (US) pages 1480-1484;
- IEEE COMMUNICATIONS MAGAZINE Bd. 29, Nr. 1 , Januar 1991 , PISCATAWAY, NJ US Seiten 105 - 110 C.BUCKINGHAM ET AL.: 'A BUSINESS CORDLESS PABX TELEPHONE SYSTEM ON 800 MHz BASED ON THE DECT TECHNOLOGY'
- PATENT ABSTRACTS OF JAPAN vol. 011, no. 231 (E-527)28. Juli 1987 & JP,A,62 047 222 (NEC) 28. Februar 1987

## Beschreibung

Die Erfindung betrifft ein Verfahren zur Antennenauswahlsteuerung in einer Funkempfangseinrichtung gemäß dem Oberbegriff des Patentanspruches 1 und eine Anordnung zur Antennenauswahlsteuerung in einer Funkempfangseinrichtung gemäß dem Oberbegriff des Patentanspruches 10.

Bei Hochfrequenz-Nachrichtenübertragungen im Gigahertzbereich sind die Übertragungsverhältnisse aufgrund der Ausbreitungseigenschaften innerhalb eines kleinen räumlichen Bereichs (Zentimeterbereich) häufig sehr verschieden. Dies hat zur Folge, daß bei bewegten Systemen selbst bei kleinen Geschwindigkeiten um beispielsweise 1 m/s die Übertragungsverhältnisse zeitlich stark schwanken. Um während der Bewegung auch in Bereichen mit schlechten Übertragungsbedingungen eine möglichst gute Übertragung zu erreichen, wird an der Basisstation des Systems eine zweite, räumlich versetzte Antenne installiert, die aufgrund der räumlichen Trennung andere Übertragungsverhältnisse liefert und auf die in diesem Fall umgeschaltet werden kann (Antenna Diversity). Eine solche Antennenansteuerung ist grundsätzlich im "Digital European Cordless Telecommunications System" (DECT) Standard vorgesehen (draft prETS 300 175-3: 1991, page 183/184). Dabei ist eine Antennenumschaltung aufgrund der Empfangsqualität in den folgenden Fällen vorgesehen:
a) Ergebnisse der A- und X-CRC;
b) Bedingungen des S- und Z-Feldes;
c) Radiosignalstärke; und
d) andere geeignete Parameter.

Aus der europäischen Patentanmeldung EP 0 213 780 A2 (Anm.-Nr.: 86306015.8) ist bereits ein "burst-mode two-way communications system" bekannt. Das bekannte System weist anders als die erfindungsgemäße Anordnung eine Mehrzahl von Sende-/Empfangseinrichtungen mit jeweils einer Schwellwertanordnung auf, die mit einem Schaltelement zur Umschaltung auf eine von zwei Antennen verbunden sind. Die Schwellwertanordnungen realisieren einen vorgeschriebenen absoluten Schwellwert (Seite 3, Spalte 3, Zeilen 55/56). Der Schwellwert soll jedoch auch von außen durch Software einstellbar und damit optimierbar sein, wobei es in der veröffentlichten europäischen Patentanmeldung offen bleibt, wie eine solche Einstellung und Optimierung zu erfolgen hätte (Spalte 3, Zeilen 57/58; Spalte 4, Zeile 41). Insbesondere bleibt auch offen, ob eine solche Optimierung durch eine einmalige Einstellung des Schwellwerts z.B. bei der Herstellung oder bei der Erstinbetriebnahme des Geräts oder auch im laufenden Betrieb erfolgt. Offenbar ist nur eine einmalige Einstellung des Schwellwerts vorgesehen, nachdem in der europäischen Patentanmeldung ausgeführt wird, daß in der Praxis der Schwellwert demjenigen Wert entspricht, bei dem gerade noch ein ausreichender Empfang erfolgt ("worst-case service"), im allgemeinen 15 dB unterhalb einer durchschnittlichen Feldstärke bei maximaler Entfernung (Spalte 4, Zeilen 41-46).

Bei dem bekannten System werden Feldstärkeeinbrüche (signal fade) anhand einer schnellen Änderungsrate (rapid rate of change) der Empfangsfeldstärke erkannt, wobei dieser Parameter mit über mehrere Zeitperioden gemittelten Werten verglichen wird (Spalte 4, Zeilen 47-56). Die dabei vorgesehene Mittelwertbildung erfordert allerdings erheblichen Rechenaufwand und entsprechende Rechenzeit. Eine Änderung des Schwellwertes bei steigenden Feldstärkewerten ist bei dem bekannten System nicht vorgesehen.

Enthalten entsprechende Systeme zwar zwei Antennen, jedoch nur einen Empfänger, so besteht für die Steuerung der Antennenumschaltung ein erhebliches Problem darin, daß die Qualität der auf beiden Antennen empfangenen Signale nicht gleichzeitig gemessen werden können. Um zu entscheiden, auf welcher Antenne Signale einer besseren Empfangsqualitat empfangen werden können, müssen die Messungen nacheinander durchgeführt werden. Dabei ergibt sich zum einen die Schwierigkeit, daß eine Messung auf einer Antenne mit dem Empfang eines Bursts auf dieser Antenne verbunden ist und daß das Meßergebnis "Empfangsqualität schlecht" zu einem Datenverlust führen kann. Zum anderen besteht ein weiteres Problem darin, daß das Meßergebnis je nach Bewegungsgeschwindigkeit der eigentlichen Einrichtung bzw. einer korrespondierenden Einrichtung, mit der eine Funkverbindung besteht, und der Burstrate nur für wenige Bursts gültig ist. Eine weitere Schwierigkeit besteht darin, daß die Empfangsverhältnisse hinsichtlich beider Antennen nicht korrelieren, so daß die Wahl des Umschaltzeitpunkts erschwert wird.

Aus der Druckschrift: Proceedings of Globecom. '90, 2. bis 5. Dezember 1990, New York (US), Seiten 1013 bis 1017; L. B. Lopes: "On the radio link performance of the digital European cordless telecommunications (DECT) system" ist eine Struktur eines simulierten DECT-Empfängers bekannt, bei dem durch ein feldstärkemessungsgesteuertes Antenna Diversity die Versorgung (Reichweite) und die Kapazität von DECT-Schnurlos-Telefonen verbessert wird.

Aus der Druckschrift: Patent Abstracts of Japan, Band 011, Nr. 231, 28. Juli 1987 in Verbindung mit der JP-A-62047222 ist ein Antenna Diversity-Empfanger bekannt, bei dem der Antenna Diversity-Effekt dadurch verbessert wird, daß eine Diversity-Schaltschwelle in Abhängigkeit von Feldstarkeänderungen des Empfangssignals geändert wird. Dazu wird zunächst ein erster an einer ersten Antenne gemessener Feldstarkewert mit einem gespeicherten Schwellwert verglichen. Ist bei diesem Vergleich der gemessene Feldstarkewert kleiner als der gespeicherte Schwellwert, so wird eine zweite Antenne aktiviert. Ist der gemessene Feldstärkewert jedoch größer als oder gleich dem gespeicherten Schwellwert, so bleibt die erste Antenne weiterhin aktiviert. Im Fall der Antennenumschaltung wird zugleich der bisher gespeicherte Schwellwert durch den gemessenen Feldstärkewert ersetzt. Dadurch wird erreicht, daß bei einer allmählichen Verkleinerung des Feldstarkewertes auch der Schwellwert kontinuierlich abgesenkt wird. Der Antenna Diversity-Empfanger ist weiterhin derart ausgebildet, daß dann, wenn der gemessene Feldstärkewert um einen gewissen Wert den gespeicherten Schwellwert übersteigt, der bis dahin gespeicherte Schwellwert aktualisiert wird.

Ausgehend von diesem Stand der Technik liegt der Erfindung die Aufgabe zugrunde, ein Verfahren und eine Anordnung der eingangs genannten Art anzugeben, das bzw. die aufgrund einer gezielten Ansteuerung der Antennen die bestmögliche Empfangsqualität für unterschiedliche Empfangsverhältnisse an und unterschiedlich fehlerbehaftete Empfangssignale der betreffenden Funkempfangseinrichtung, insbesondere der Basisstation eines Schnurlostelefons, bereitstellt.

Diese Aufgabe wird ausgehend von dem im Oberbegriff des Patentanspruches 1 definierten Verfahren durch die im kennzeichnenden Teil des Patentanspruches 1 bzw. der im Oberbegriff des Patentanspruches 10 definierten Anordnung durch im kennzeichnenden Teil des Patentanspruches 10 angegebenen Merkmale gelöst.

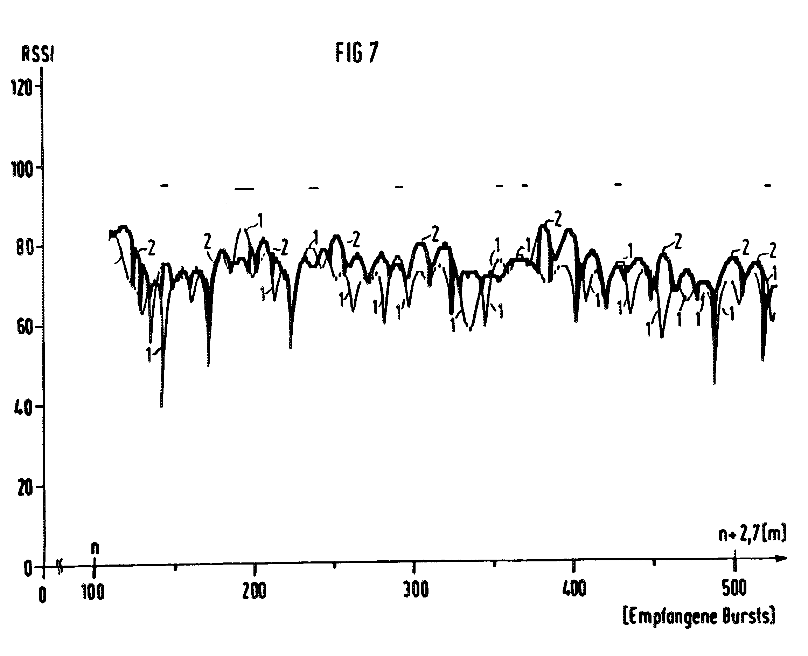

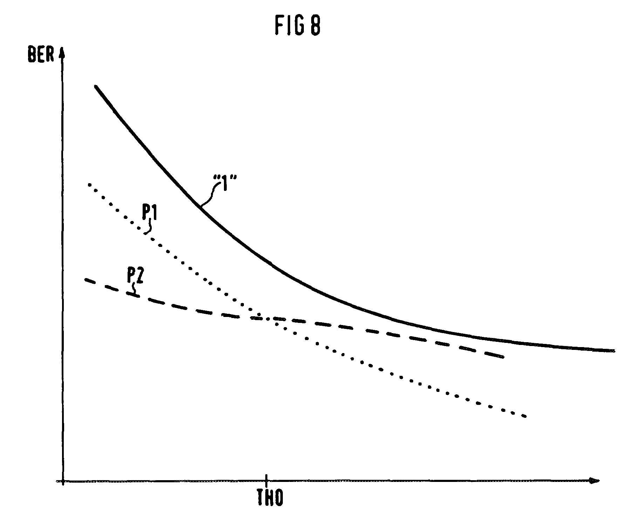

Die erfindungsgemaße Anordnung analysiert die Empfangsverhältnisse und realisiert in Abhängigkeit von bestimmten Kriterien (gemessene Feldstärke über- bzw. unterschreitet einen Schwellwert) verschiedene Auswahlprozeduren, wobei innerhalb jeder Prozedur die Entscheidung zur Aktivierung einer von mehreren Empfangsantennen unabhängig von dem jeweiligen Kriterium erfolgt. Mit der gezielten Auswahl einer von mehreren, insbesondere zwei Antennen wird die Empfangsqualität erheblich verbessert, Dies ist in Figur 8 dargestellt, die die Abhängigkeit der Bitfehlerrate von den erfindungsgemaß realisierten Prozeduren widergibt. Auch Figur 7 veranschaulicht die vorteilhafte Wirkung der erfindungsgemäßen Anordnung.

Nach der Auswahl einer erfindungsgemäßen Prozedur können die eingangs erwähnten Antennenumschaltungen erfolgen. Die Erfindung erstreckt sich jedoch auch auf weitere Prozeduren (Ansprüche 6 ff.). Wesentlich dabei ist unter anderem die besondere Steuerung der Schwellwerte, die den Antennenumschaltungen zugrunde gelegt werden. Durch diese Schwellwertsteuerungsprozeduren wird in der weitaus überwiegenden Zahl der Fälle gewährleistet, daß die Antenne mit der jeweils günstigeren Empfangsqualität aktiviert wird (vgl. Figur 7), wobei aber der Aufwand für die Aktualisierung der Schwellwertsteuerungsprozeduren relativ gering gehalten wird.

Die Erfindung zeichnet sich weiterhin durch den Vorteil aus, daß Bereiche mit relativ ungünstigen Übertragungsverhältnissen erkannt werden, bevor sich die Übertragungsverhältnisse in einem solchen Umfang verschlechtern, daß es zu Übertragungsfehlern kommt. Bei steigenden oder konstant bleibenden Feldstärkewerten wird die gerade aktivierte Antenne nicht gewechselt, obwohl nicht auszuschließen ist, daß die Empfangssignalqualität auf der gerade nicht aktivierten Antenne besser ist als auf der gerade aktivierten Antenne. Mit dieser Maßnahme wird aber die Rechnerkapazität der Anordnung relativ gering gehalten.

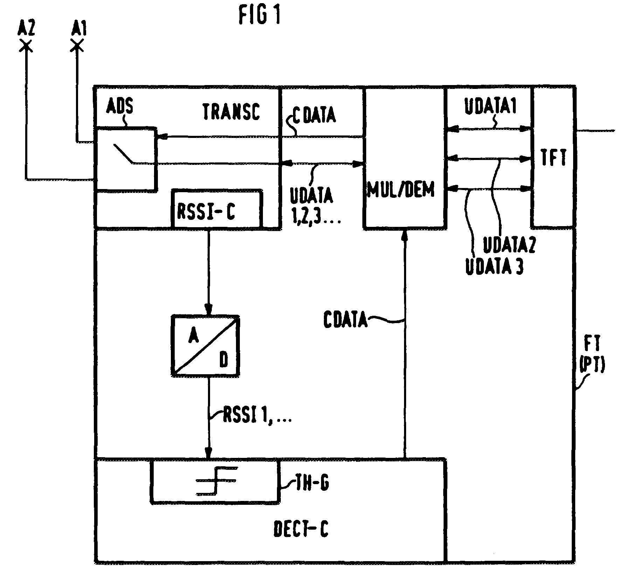

Eine weitere vorteilhafte Ausführungsform der Erfindung ist dadurch gekennzeichnet, daß zu jedem gemessenen Feldstärkewert ein Schwellwert gebildet wird, und daß in Abhängigkeit von dem Schwellwert und in Abhängigkeit von dem im Meßzeitraum gemessenen Feldstarkewert für den dem Meßzeitraum folgenden Zeitraum die eine oder andere Antenne für den Empfang der Signale aktiviert wird. Diese Ausführungsform zeichnet sich durch eine Mehrzahl von Vorteilen aus. Zunächst besteht ein wesentlicher Vorteil darin, daß die erfindungsgemäße Bildung der Schwellwerte aus Feldstärkemeßwerten unabhängig von einer (über mehrere Zeiträume) durchschnittlichen Feldstärke erfolgt. Eine solche durchschnittliche Feldstärke weist hohe Werte bei einer kleinen Distanz zwischen einer Funksende- und einer Funkempfangseinrichtung auf, während die durchschnittliche Feldstärke bei einer großen Distanz zwischen Funksende- und Funkempfangseinrichtung geringe Werte aufweisen würde. Erfindungsgemäß werden die Schwellwerte und damit die beiden Antennen der Funkempfangseinrichtung unabhängig von der Distanz zwischen Funksende- und Funkempfangseinrichtung gebildet. Weiterhin erfolgt die Bildung der Schwellwerte und damit die Ansteuerung der beiden Antennen unabhängig von Bauteiletoleranzen der Feldstärkemeßeinrichtung (RSSI-C, Fig. 1) sowie von temperaturabhängigem Verhalten der Komponenten in der erfindungsgemäßen Anordnung. Schließlich erübrigt es sich, die Feldstärkemeßeinrichtung zu eichen bzw. abzugleichen, da die Anordnung nicht abhängig von absoluten Feldstärkewerten arbeitet, sondern gemessene Feldstärkewerte in Bezug zueinander setzt.

Die Ausführungsform nach Patentanspruch 4 zeichnet sich durch den Vorteil aus, daß bei der Festlegung des Schwellwertes der zeitliche Verlauf der Feldstärke über zwei aufeinanderfolgende Zeiträume berücksichtigt wird.

Vorteilhafte Ausführungsformen der Erfindung sind in den Unteransprüchen gekennzeichnet.

Die Erfindung wird nun in einem zum Verständnis erforderlichen Umfang anhand der Zeichnungen beschrieben.

Es zeigt:
- Fig. 1: eine Funkempfangseinrichtung mit zwei Antennen, die nach dem erfindungsgemäßen Verfahren aktiviert werden;
- Fig. 2: ein Flußdiagramm des erfindungsgemäßen Verfahrens und zur Aktivierung einer von mehreren unterschiedlichen Prozeduren, mit denen eine von mehreren Antennen der Funkempfangseinrichtung ausgewählt werden;
- Fig. 3 und 4: Flußdiagramme zweier unterschiedlicher Prozeduren;
- Fig. 5: ein Diagramm, das die Zuordnung der Zeiträume veranschaulicht, in denen Feldstärkewerte gemessen und Schwellwerte gebildet werden;
- Fig. 6: den zeitlichen Verlauf empfangener Signale mit aus Feldstärkemeßpunkten gebildeten Schwellwerten und Darstellungen von Antennenwechseln im Rahmen einer Prozedur;
- Fig. 7: den zeitlichen Verlauf empfangener Signale mit Feldstärkemeßpunkten gebildeten Schwellwerten und Darstellungen von Antennenwechseln; und
- Fig. 8: die Abhängigkeit der Bitfehlerrate von den erfindungsgemäßen Prozeduren.

Die in Fig. 1 dargestellte Funkempfangseinrichtung wird beispielsweise durch die Basisstation FT eines schnurlosen Telefons gebildet. Dabei wird bei der folgenden Beschreibung davon ausgegangen, daß für das Schnurlostelefon der DECT-Standard implementiert ist. Hierauf ist die Erfindung jedoch nicht eingeschränkt. Die Funkempfangseinrichtung weist unter anderem ein Empfangsteil mit zwei Empfangsantennen A1 und A2 auf. Zusätzlich kann in der Basisstation FT des schnurlosen Telefons eine Funksendeeinrichtung vorgesehen sein, die mit der Funkempfangseinrichtung verbunden ist. Die Funksendeeinrichtung weist unter anderem ein Sendeteil auf, das ebenfalls mit den Antennen A1 und A2 verbunden ist. Die Antennen A1, A2 fungieren in diesem Fall als Sendeantennen. Das Sende-/Empfangsteil ist in Fig. 1 mit "TRANSC" bezeichnet.

In das Sende-/Empfangsteil TRANSC ist zunächst ein Schaltelement ADS (Antenna Diversity Switch) integriert, welches von Steuerdaten CDATA gesteuert wird, die ein Prozessor DECT-C - wie noch beschrieben wird - bildet und beispielsweise über eine Multiplex-/Demultiplexeinheit MUL/DEM dem Sende-/Empfangsteil TRANSC zuführt.

Als Prozessor DECT-C kann ein programmierbarer Mikroprozessor oder eine Hardwarestruktur verwendet werden, die beispielsweise Latches zur Zwischenspeicherung gebildeter Feldstärke - und/oder Schwellwerte und Komparatoren zum Vergleich verschiedener Werte aufweist. Im weiteren bezeichnet DECT-C beide Ausgestaltungen.

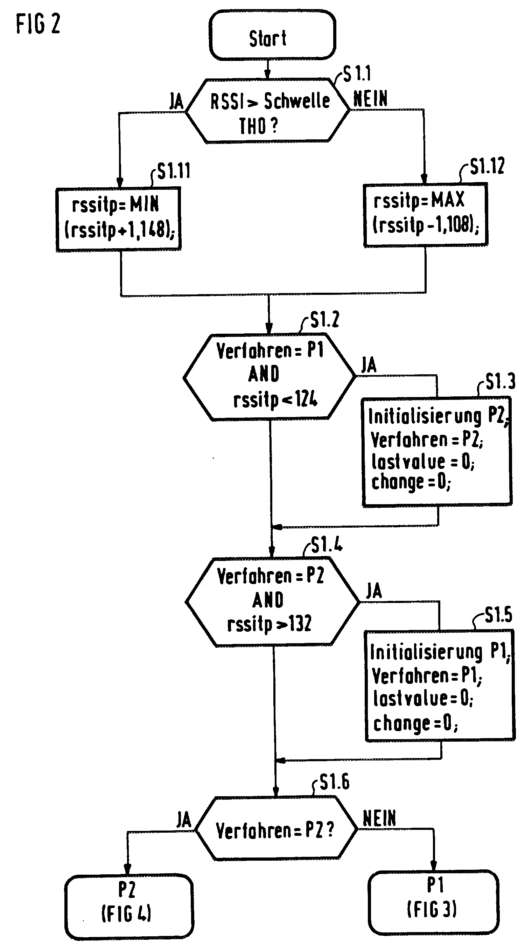

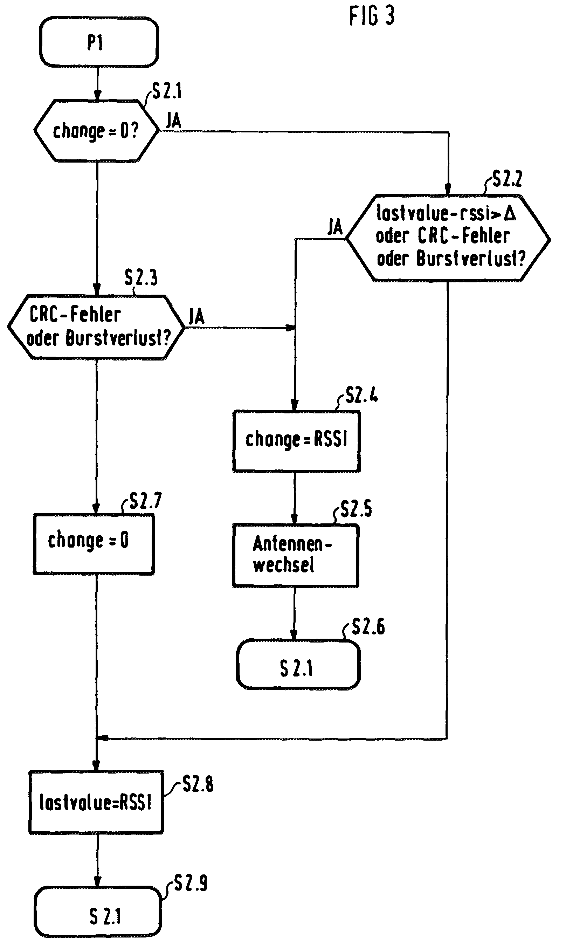

In dem Sende-/Empfangsteil TRANSC ist ferner eine Einrichtung RSSI-C integriert, die die Feldstärke empfangener Signale mißt. Diese Einrichtung RSSI-C dient allgemein der Prüfung, ob ein Kanal belegt ist (vgl. DECT-draft prETS, 175-3:1991, page 164). Die Vorschrift, wie die Feldstärke zu messen ist, wird im DECT-Standard angegeben (vgl. DECT-draft prETS 300 175-2:1991 page 31,6.2 und page 38,8.3). Die Kanalbelegung wird durch das Messen der Feldstärke (Mindestfeldstärke) empfangener Signale festgestellt. Im Rahmen des erfindungsgemäßen Verfahrens übernimmt die Einheit RSSI-C eine weitere Funktion, nämlich die Messung der Feldstärke empfangener Signale, wobei die Meßergebnisse dem Prozessor DECT-C über einen Analog/Digitalwandler A/D zugeführt werden und von dem Prozessor zur Bildung der Steuerdaten CDATA und zur Steuerung des im Prozessor DECT-C integrierten Schwellwertgenerators TH-G verwendet werden. Der Schwellwertgenerator TH-G bildet im laufenden Betrieb fortwährend aktualisierte Werte (TH in den Figuren 2 und 3), wobei gegenüber jeweils einem vorliegenden Wert ein unterschiedlicher (höherer oder niedrigerer) oder ein gleicher Wert gebildet wird. Die Bildung der Schwellwerte erfolgt in Abhängigkeit von den in aufeinanderfolgenden Zeiträumen gemessenen Feldstärkewerten (RSSI in den Figuren 2 und 3) unter Mitwirkung der Einheit RSSI-C und des Prozessors DECT-C.

Die Multiplex-/Demultiplexeinheit MUL/DEM erzeugt bzw. empfängt beispielsweise 1,152 Mbit/s-Daten im DECT-Burst-Format und ordnet empfangenen bzw. zu sendenden Datenpaketen bis zu beispielsweise sechs internen bzw. drei externen Telefonverbindungen im Zeitlagegetrenntverfahren (Time Division Multiple Access TDMA) zu.

Der Einrichtung MUL/DEM sind Codier-/Decodiereinrichtungen ADPCM integriert, denen interne Teilnehmerschaltungen bzw. Amts- oder Nebenstellenanlagenschaltungen nachgeschaltet sind. Diese der Einrichtung MUL/DEM nachgeschalteten Einrichtungen bilden ein Telefonteil TFT, das im übrigen in gleicher Weise aufgebaut sein kann wie die Telefonleitungsteile bekannter Schnurlostelefon-Systeme (Wolf, Klaus: "Auch ohne Schnur "auf Draht"" ,telcom report 10, 1987), Heft 2, Seiten 130 ff. (134).

Es ist darauf hinzuweisen, daß die anhand von Fig. 1 beschriebene Funkempfangseinrichtung nur ein (Sende-/) Empfangsteil TRANSC und damit nur eine Einrichtung RSSI-C zur Messung der Feldstärkewerte aufweist. Ebenso weist die anhand von Fig. 1 beschriebene Funkempfangseinrichtung nur einen Schwellwertgenerator TH-G auf. Damit läßt sich die Qualität der auf beiden Antenen A1,A2 empfangenen Signale nicht gleichzeitig messen.

Sofern die in Figur 1 dargestellte Funkempfangseinrichtung ein Mobilteil PT eines schnurlosen Telefons mit mehreren Antennen darstellt, so kann der Funktionsblock TFT durch die Komponenten gebildet werden, die im Mobilteil unabhängig von dem erfindungsgemäßen Verfahren arbeiten (vgl. "Mikrophon, Akkumulatoren, Kennungskontakt, LED-Anzeige, Tastenfeld 4x5, Klappenschalter, Ruforgan, Hörkapsel", telcom report 10 (1987), Heft 2, Seite 135).

Das in Fig. 2 dargestellte Flußdiagramm erläutert, wie eine von zwei Prozeduren P1 bzw. P2 ausgewählt werden (Auswahlprozeduren P1, P2). Grundsätzlich wird die Prozedur P1 aktiviert, wenn ein Schwellwert THO überschritten wird, während die Prozedur P2 aktiviert wird, wenn diese Schwelle THO unterschritten wird. Allerdings wird zur Vermeidung eines häufigen Prozedurwechsels bei einer ursprünglichen Überschreitung bzw. Unterschreitung des Schwellwerts THO und bei einer vorgebbaren Zahl nachfolgender Unterschreitungen bzw. Überschreitungen dieses Schwellwerts THO die ursprünglich realisierte Prozedur P1, P2 weiter realisiert.

Die vorgebbare Zahl wird durch eine Zählelement rssitp realisiert, das auf einen oberen und einen unteren Zählerstand abgefragt wird (S1.11,S1.12 in Fig.2). Das Zählelement kann einen Wertebereich einnehmen, der nach oben und nach unten begrenzt ist, um bei sich ändernden Feldstärkeverhältnissen in angemessener Zeit zu reagieren.

In Fig. 2 bedeuten:
- RSSI:: der gerade gemessene Feldstärkewert;
- Schwellwert THO:: eine bereits bei der Herstellung vorgebbare bzw. bei der Erstinbetriebnahme kalibrierbare Schwelle;
- rssitp:: ein insbesondere durch entsprechende Softwareprozeduren realisierbares Zählelement;
- last value:: der letzte gemessene Feldstärkewert, sofern kein Antennenwechsel vor dem Ablauf nach Fig. 2 erfolgt ist;
- change:: =0, wenn vor dem Ablauf nach Fig. 2 die Antenne nicht gewechselt wurde;
im Falle eines Antennenwechsels derjenige Feldstärkewert, der als letzter Feldstärkewert auf der ursprünglich aktivierten Antenne, also vor dem Antennenwechsel gemessen wurde.

Die Initialisierungswerte lauten:
rssitp=128;
Verfahren=P1;
last value=0;
change=0;
threshold=(Schwellwert THO) = 80.

Im folgenden Beispiel wird davon ausgegangen, daß zu Beginn des Verfahrens ein erster Feldstärkewert RSSI den Wert 130 hat und damit über der Schwelle von THO=80 liegt. In den zwei folgenden Meßzeiträumen beträgt der Feldstärkewert jeweils 75 und liegt damit unterhalb der Schwelle THO. Im Anschluß daran nimmt die Feldstärke den Wert 125 an, liegt also wiederum über dem Schwellwert THO. Es zeigt sich, daß jeweils die Prozedur P1 ausgewählt wird, auch im Zusammenhang mit den Feldstärkewerten, die unterhalb des Schwellwerts THO liegen.

In Fig. 3 sind die Verfahrensschritte der Prozedur P1 dargestellt. "Change", "last value" und "RSSI" haben die im Zusammenhang mit Fig. 2 beschriebenen Bedeutungen.

Wie aus Fig. 3 ersichtlich ist, wird bei einem Auftreten eines CRC-Fehlers oder eines Burst-Verlusts die jeweils aktivierte Antenne deaktiviert und die jeweils andere Antenne aktiviert. Der Antennenwechsel in Abhängigkeit von den genannten Faktoren ist bereits im DECT-Standard vorgesehen. Ferner wird bei der erfindungsgemäßen Anordnung, wie dies im Zusammenhang mit dem Schritt S2.2 dargestellt ist, ein Antennenwechsel ausgelöst, wenn last value - rssi größer einem vorgebbaren Betrag delta ist.

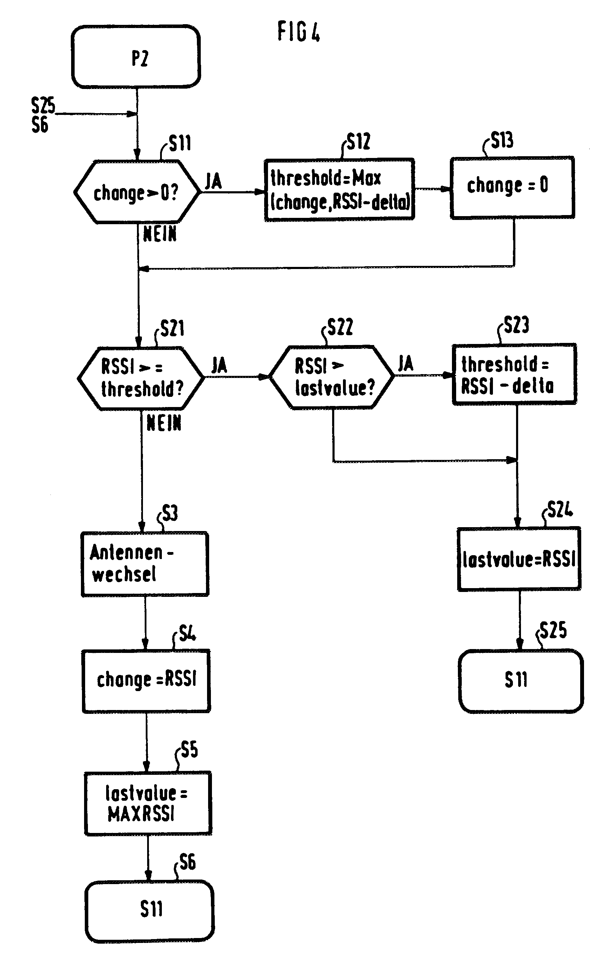

In Fig. 4 sind die Verfahrensschritte der Prozedur P2 dargestellt; diese können auch durchgeführt werden, wenn der Schwellwert THO nicht vorgesehen ist. In einem ersten Verfahrensschritt S 11 wird geprüft, ob ein Wert "change" größer O ist. Es werden in diesem Zusammenhang zwei Fälle unterschieden: 1. "change" = 0, wenn vor dem Schritt S11 die Antenne nicht gewechselt wurde; 2. "change" erhält für den Fall eines Antennenwechsels den Feldstärkewert zugewiesen, der als letzter Feldstärkewert auf der ursprünglich aktivierten Antenne also vor dem Antennenwechsel gemessen wurde.

Bei der Initialisierung des Verfahrens hat "change" den Wert 0, so daß der Schritt S21 folgt.

Hat "change" jedoch einen Wert ungleich 0 (die Antenne wurde vor dem Schritt Sll gewechselt) folgt Schritt S12. Dem vom Schwellwertgenerator TH-G gebildeten Schwellwert "threshold" wird der Wert (MAX (change, RSSI-delta)) zugewiesen, wobei "RSSI" den ersten auf der neuen Antenne gemessenen Feldstärkewert bezeichnet. Im nächsten Schritt S13 wird "change" der Wert = 0 zugewiesen. Im folgenden Schritt S21 wird geprüft, ob der gerade gemessene Feldstärkewert RSSI größer oder gleich dem vorliegenden Schwellwert ist. Bei der Initialisierung des Systems (Schritte S11,S21) hat der Schwellwert den Wert 0; ansonsten nimmt der Schwellwert den in Schritt S12 zugewiesenen Wert an oder er hat den im vorangegangenen Ablauf im Schritt S23 zugewiesenen Wert.

Ergibt sich bei der Abfrage in Schritt S21 ein positives Ergebnis (der aktuelle Feldstärkewert liegt über dem Schwellwert bzw. ist gleich dem Schwellwert), wird im Schritt S22 geprüft ob der aktuelle Feldstärkewert größer ist als der zuvor gemessene und zwischengespeicherte Feldstärkewert ("last value"). Bei einem positiven Ergebnis dieser Überprüfung (der neue Feldstärkewert ist größer als der alte Feldstärkewert) wird in Schritt S23 dem Schwellwert "threshold" ein neuer Wert zugewiesen, der gleich dem aktuellen Feldstärkewert abzüglich eines Wertes delta ist.

Ergibt sich dagegen im Schritt S22, daß der aktuelle Feldstärkewert kleiner gleich dem alten Feldstärkewert ist, so wird in Schritt S24 "last value" der aktuelle Feldstärkewert RSSI zugewiesen. Dies gilt auch, wenn nach Schritt S22 zu dem Schritt S23 übergegangen wurde. Im Anschluß an Anschluß an den Schritt S24 folgt der Schritt S25, der zurück zum Schritt S11 führt.

Ergibt sich bei dem Schritt S21 ein negatives Ergebnis (der aktuelle Feldstärkewert liegt unter dem vorliegenden Schwellwert), so wird im Schritt S3 die bisher aktivierte Antenne deaktiviert und eine andere Antenne aktiviert ("Antennenwechsel").

Im Schritt S4 wird dem Wert "change" der aktuelle Feldstärkewert zugewiesen. Im Schritt S5 erhält der Wert "last value" einen Maximalfeldstärkewert MAXRSSI. Diese Zuweisung ist erforderlich, damit in dem jeweils folgenden Ablauf der Schwellwert "threshold" nicht zweimal (S12,S23) verändert wird.

Der Schritt S6 führt zum Schritt S11 zurück.

Die dargestellten Schritte werden insbesondere durch ein Steuerungsprogramm realisiert, das dem zentralen Prozessor DECT-C (Fig. 1) zugeordnet ist.

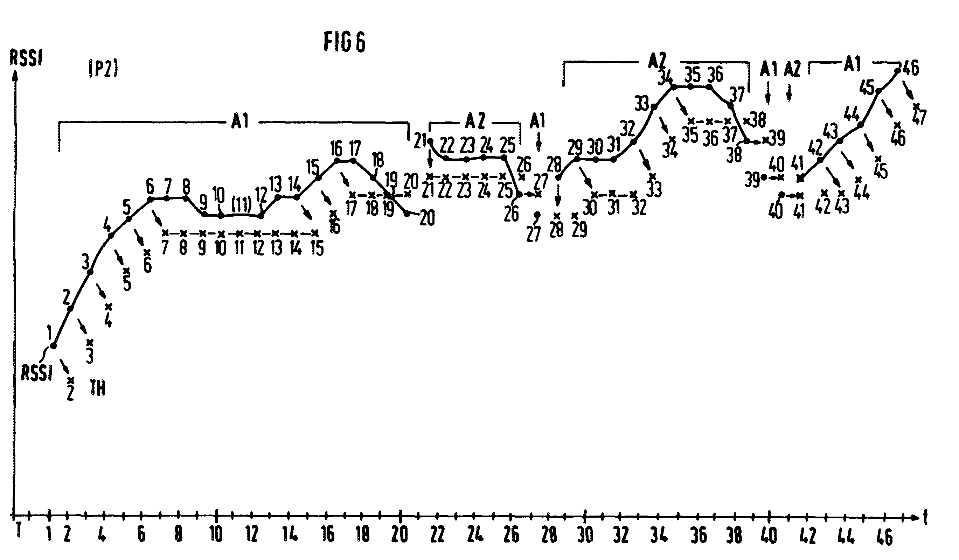

Dieses Steuerprogramm bzw. die entsprechende Hardwarestruktur mit Latches, Komparatoren und sonstigen Komponenten ist allgemein in der folgenden Weise ausgestaltet (vgl. Fig. 4 und 6):

In Abhängigkeit von gemessenen Feldstärkewerten (RSSI1) empfangener Signale und in Abhängigkeit von einer Überschreitung bzw. einer Unterschreitung eines Schwellwerts (THO) werden unterschiedliche Prozeduren (P1,P2) realisiert werden, wobei innerhalb jeder Prozedur die Entscheidung zur Aktivierung einer von mehreren Antennen (A1,A2) der Funkempfangseinrichtung unabhängig von dem Schwellwert (THO) erfolgt. In diesem Zusammenhang wird bei einer ursprünglichen Überschreitung bzw. Unterschreitung des Schwellwerts (THO) und einer vorgebbaren Zahl nachfolgender Unterschreitungen bzw. Überschreitungen des Schwellwerts (THO) die ursprünglich realisierte Prozedur (P1,P2) weiter realisiert (Hysterese).

Der zentrale Prozessor (DECT-C) einer dem "Digital European Cordless Telecommunications" (DECT)-Standard entsprechenden Basisstation (FT) oder eines Mobilteils (PT) führt in der Weise ausgestaltete Verfahrensschritte durch, daß bei einem Überschreiten des Schwellwerts (THO) das empfangene Signal auf einen Fehler in einem der Prüfworte (CRC,A-CRC, X-CRC) überprüft wird, und daß bei Erkennen eines solchen Fehlers eine bisher nicht aktivierte Antenne (A2) der Funkempfangseinrichtung für den weiteren Emfang von Signalen aktiviert wird.

Bei einem Überschreiten des Schwellwertes (THO) wird das empfangene Signal auch auf den Empfang des Bursts überprüft, und bei Erkennen des Nichtempfangs des Bursts wird eine bisher nicht aktivierte Antenne (A2) der Funkempfangseinrichtung für den weiteren Empfang von Signalen aktiviert.

Weiterhin werden bei einem Überschreiten des Schwellwertes (THO) die während aufeinanderfolgender Zeiträume (T1,T2, T3) gemessenen Feldstärkewerte (RSSI1,RSSI2, RSSI3) miteinander verglichen, und, sofern ein gemessener Feldstärkewert (RSSI2) unterhalb einer vorgebbaren Differenz unter einem unmittelbar zuvor gemessenen Feldstärkewert (RSSI1) liegt, wird eine bisher nicht aktivierte Antenne (A2) der Funkempfangseinrichtung für den weiteren Empfang von Signalen aktiviert.

Der zentrale Prozessor (DECT-C) führt auch in der folgenden Weise ausgestaltete Verfahrensschritte durch, daß nach einem Unterschreiten des Schwellwerts (THO) in Abhängigkeit von in aufeinanderfolgenden Zeiträumen (T1,T2) gemessenen Feldstärken (RSSI1,RSSI2) für den dem Meßzeitraum (T2) folgenden Zeitraum (T3) eine von mehreren Antennen (A1,A2) für den Empfang der Signale aktiviert wird.

Diese Verfahrensschritte sowie auch die im folgenden genannten Verfahrensschritte kann der zentrale Prozessor DECT auch unabhängig von dem Schwellwert THO durchführen. So führt der zentrale Prozessor (DECT-C) auch in der Weise ausgestalte Verfahrensschritte durch, daß, sofern der im Meßzeitraum (T2) gemessene Feldstärkewert (RSSI2) größer als oder gleich dem im vorangegangenen Zeitraum (T1) gemessenen Feldstärkewert (RSSI1) ist, die im Meßzeitraum (T2) aktivierte Antenne (A1) für den dem Meßzeitraum (T2) folgenden Zeitraum (T3) aktiviert bleibt. Zu jedem gemessenen Feldstärkewert (RSSI1,RSSI2) wird ein feldstärkewertindividueller weiterer Schwellwert (TH2,TH3) gebildet, und in Abhängigkeit von dem weiteren Schwellwert (TH2) des dem Meßzeitraum (T2) vorangegangenen Zeitraums (T1) und in Abhängigkeit von dem im Meßzeitraum (T2) gemessenen Feldstärkewert (RSSI2) wird für den dem Meßzeitraum (T2) folgenden Zeitraum (T3) eine von mehreren Antennen (A1,A2) für den Empfang der Signale aktiviert.

In diesem Zusammenhang wird nach einem Antennenwechsel (A1-A2) der erste Schwellwert (TH21,TH27,TH28,TH39,TH40, TH41) als Maximum zweier Werte gebildet, von denen der erste Wert gleich dem Feldstärkewert (RSSI20,RSSI26, RSSI27 ,RSSI38,RSSI39,RSSI40) ist, der als letzter Meßwert vor dem Antennenwechsel gemessen worden ist und von denen der zweite Wert gleich dem ersten nach dem Antennenwechsel gemessenen Feldstärkewert (RSSI21,RSSI27,RSSI28,RSSI39, RSSI40,RSSI41) abzüglich eines vorgebbaren Betrages (delta, Fig.4) ist.

Nach einer weiteren Regel bei der Bildung des ersten Schwellwerts TH21 nach einem Antennenwechsel wird dieser als arithmetisches Mittel zweier Werte gebildet, von denen der erste Wert das Produkt aus einem Faktor a und dem Feldstärkewert RSSI20 (letzter Meßwert vor dem Antennenwechsel) und von denen der zweite Wert das Produkt aus einem Faktor b mit dem Feldstärkewert RSSI21 (erster nach dem Antennenwechsel gemessener Feldstärkewert) ist. Summe der beiden Faktoren a und b ist beispielsweise gleich 2. Beispielsweise ist a=0,8 und b=1,2, so daß der zuletzt gemessene Feldstärkewert stärker berücksichtigt wird.

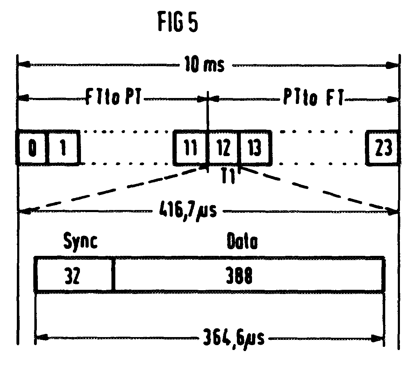

Fig. 5 veranschaulicht den Zusammenhang der Zeiträume, in denen Feldstärkewerte gemessen und Schwellwerte gebildet werden. Das Diagramm der Fig. 5 zeigt einen TDMA-Rahmen nach dem DECT-Standard. Dieser Rahmen hat eine Rahmenlänge von ca. 10 ms und besteht aus 24 Zeitkanälen 0...23, wobei die ersten 12 Zeitkanäle 0...11 Verbindungen von einer Basisstation zu Mobilteilen ("FT to PT" = "Fix to Portable") und die zweiten 12 Zeitkanäle 12...23 Verbindungen von den Mobilteilen zu der Basisstation ("PT to FT" = "Portable to Fix") dienen.

Jedem Zeitkanal 0...23 ist ein Zeitraum von 416,7 µs zugewiesen. Davon dienen 364,6 µs der Übertragung von 32 Synchronisierbits (Sync) und 398 Nutzdatenbits (Data). Die restliche Zeit von 416,7 µs - 364,6 µs ist eine sogenannte Guard-Zeit, die u.a. dazu dient, die Sende- bzw. Empfangseinrichtung TRANSC auf eine weitere im DECT-Standard vorgesehene Frequenz im Bereich 1880-1900 MHz einzustellen (Frequenz- und Zeitmultiplex).

Ein Duplexkanal zwischen der Basisstation und einem Mobilteil besteht beispielsweise aus dem Zeitkanal 0 (FT to PT) und dem Zeitkanal 12 (PT to FT). Der Zeitkanal 12 entspricht z.B. dem vorstehend genannten Zeitraum T1, in dem der Feldstärkewert RSSI1 gemessen wird. Im folgenden TDMA-Rahmen, wieder im Zeitkanal 12, der dem Zeitraum T2 entspricht und 10 ms nach dem Beginn des Zeitraums T1 beginnt, wird der folgende Feldstärkewert RSSI2 gemessen.

Die Bildung eines Schwellwertes kann allgemein nicht nur in Abhängigkeit von zwei Feldstärkewerten, sondern einer Mehrzahl von Feldstärkewerten erfolgen.

Fig. 6 zeigt den Zusammenhang zwischen den zu verschiedenen Zeitpunkten gemessenen Feldstärkewerten RSSI, den in Abhängigkeit dieser Feldstärkewerte RSSI gebildeten Schwellwerte TH und die entsprechende Aktivierung der Empfangsantennen A1,A2 des Systems, insbesondere für den Fall eines Unterschreitens der Schwelle THO (Prozedur P2). Dieser Zusammenhang ist für ausgewählte Feldstärke- und Schwellwerte durch Pfeile dargestellt.

Auf der Zeitachse t sind Zeiträume T1 bis T46 angegeben. In diesen Zeiträumen T1...T46 werden beispielsweise jeweils zu Beginn eines Zeitraums die Feldstärke des jeweils empfangenen Signals gebildet. Insbesondere in Abhängigkeit von dem gerade gemessenen und dem zuvor gemessenen Feldstärkewert bildet der Schwellwertgenerator TH-G für den jeweils nächsten Zeitraum einen Schwellwert. Die Regeln für die Schwellwertbildung sind oben beschrieben. Im folgenden werden diese Zusammenhänge anhand des in Fig. 4 dargestellten konkreten Beispiels näher erläutert. Die zeitraumindividuellen Feldstärkewerte RSSI1...RSSI46 sind jeweils oberhalb der entsprechenden (Meß-) Punkte angegeben, während die zugehörigen Schwellwerte TH2...TH47 durch "x" dargestellt sind. Die entsprechenden Ziffern sind grundsätzlich unterhalb der "x" angegeben.

Es wird zunächst davon ausgegangen, daß die Antenne A1 aktiviert ist. In den Zeiträumen T1 bis einschließlich T5 werden jeweils nacheinander steigende Feldstärkewerte RSSI1...RSSI6 gemessen. Die Schwellwerte TH2...TH7 werden in entsprechender Weise nachgeführt, wobei der Schwellwert THn+1 jeweils um einen Betrag delta (Fig. 4, Schritte S12,S23) unterhalb des Schwellwerts RSSIn liegt.

In den Zeiträumen T6 und T7 wird jeweils eine konstante Feldstärke RSSI7,RSSI8 gemessen; in entsprechender Weise werden die Schwellwerte TH7 und TH8 gebildet. Die Antenne A1 bleibt weiter aktiviert.

Bei sinkender Feldstärke (T8-T9) bleibt der folgende Schwellwert TH10 (=TH9) konstant, da RSSI9 nicht unter TH9 abfällt. Die ursprüngliche Antenne A1 bleibt aktiviert.

Im folgenden (T10-T17) steigt die Feldstärke wieder, bzw. bleibt konstant, wobei die Schwellwerte wie schon beschrieben aktualisiert werden und die ursprüngliche Antenne A1 aktiviert bleibt. Sie bleibt zunächst auch im Zeitraum T18 aktiviert, da RSSI18 über TH18 liegt. Ebenso wird TH18 als TH19 übernommen.

Zu Beginn des Zeitraums T19 ist der gemessene Feldstärkewert RSSI19 gleich dem Schwellwert TH19. Im Anschluß daran fällt die Feldstärke RSSI20 unter den entsprechenden Schwellwert TH20. Das Unterschreiten der Feldstärke unter den jeweiligen Schwellwert führt zu dem Antennenwechsel von A1 zu A2 mit Beginn des Zeitraums T21.

Im folgenden sinkt die Feldstärke wiederum ab bzw. bleibt auf einem konstanten Wert bis sie nach dem Zeitpunkt T25 unter den Schwellwert fällt (RSSI26 < TH26). Dies führt zu dem Antennenwechsel A2/A1.

Der neue Schwellwert TH27 wird entsprechend Max(RSSI26, RSSI27-delta) gebildet.

Der dann als erster gemessene Feldstärkewert RSSI28 liegt über dem Schwellwert TH28, der entsprechend Max(RSSI27, RSSI28-delta) gebildet wird. Im Anschluß daran steigen die Feldstärkewerte bzw. bleiben konstant bis zum Zeitpunkt T36. Zu Beginn des Zeitraums T37 liegt RSSI37 über TH37, so daß die gerade aktivierte Antenne A2 aktiviert bleibt und der neue Schwellwert TH38 unverändert gegenüber dem Schwellwert TH37 bleibt. Zu Beginn des Zeitraums T38 liegt RSSI38 unter TH38, so daß die Antenne gewechselt wird (A2/A1). Zu Beginn des Zeitraums T39 liegt RSSI39 unter dem Schwellwert TH39, der wie der Schwellwert TH27 gebildet wird, so daß die Antenne wiederum gewechselt wird (A1/A2), Dies gilt auch für die Schwellwerte TH40 und TH41 und die entsprechenden Antennenwechsel.

Es ist allgemein festzustellen, daß durch die neue Festlegung des Schwellwertes nach einem Antennenwechsel sichergestellt wird, daß auch in dem Fall, in dem auf beiden Antennen A1,A2 relativ schlechte Übertragungsverhältnisse vorliegen, der Schwellwert überschritten wird.

Fig. 7 zeigt einen exemplarischen RSSI-Verlauf auf einer beliebigen Meßstrecke von n bis n +2,70 m, die das Mobilteil in Bezug auf die Basisstation zurücklegt, wobei die Meßstrecke in einem beliebigen Ausgangspunkt beginnt und sich in einer beliebigen Richtung über 2,70 m erstreckt.

Dabei sind die RSSI-Meßwerte auf den beiden Antennen einer erfindungsgemäßen Funkempfangseinrichtung (DECT-Basisstation) dünn hinterlegt und mit "1" bezeichnet. Diese Meßwerte erhält man durch einen besonderen Meßaufbau; im Normalbetrieb ist nur jeweils eine Antenne aktiviert.

Die im Fettdruck wiedergegebene Meßkurve, die mit "2" bezeichnet ist, veranschaulicht das Ergebnis des erfindungsgemäßen Verfahrens bei einer Bewegungsgeschwindigkeit (feste Basisstation, bewegtes Mobilteil) von ca. 0,7 m/s (Schrittgeschwindigkeit).

Fig. 7 veranschaulicht, daß der Empfang auf der jeweils günstigeren Antenne A1,A2 nahezu immer gewährleistet ist. Die horizontale Linie im oberen Bereich der Figur zeigt Zeiten, in denen die Antenne angeschaltet ist, die zu ungünstigeren Empfangsbedingungen führt.

Fig. 8 zeigt die Abhängigkeit der Bitfehlerrate (bit error rate BER) von empfangenen Feldstärken und den Prozeduren P1 (gepunktete Linie) und P2 (gestrichelte Linie) sowie für den Fall, daß in Systemen mit nur einer Antenne keine Umschaltung auf eine weitere Antenne erfolgen kann (durchgezogene Linie "1").

Für Feldstärkewerte unter THO bewirkt die Prozedur P2 eine stärkere Verringerung der Bitfehlerrate als die Prozedur P1, während die Prozedur P1 für Feldstärkewerte über THO die Bitfehlerrate stärker reduziert als die Prozedur P2.

## Patentansprüche

1. Verfahren zur Antennenauswahlsteuerung in einer Funkempfangseinrichtung, insbesondere der Basisstation (FT) oder des Mobilteils (PT) eines schnurlosen Telefons, mit einer Einrichtung (RSSI-C) zur Messung der Feldstärke empfangener Signale und einem zentralen Prozessor (DECT-C, TH-G), der aus den gemessenen Feldstärken mindestens einen Schwellwert (TH0, TH2, TH3, TH21, TH27, TH28, TH39, TH40, TH41) bildet,
**dadurch gekennzeichnet,**
daß der zentrale Prozessor (DECT-C, TH-G) in der Weise ausgestaltete Verfahrensschritte durchführt, daß in Abhängigkeit von gemessenen Feldstärkewerten (RSSI1) empfangener Signale und in Abhängigkeit von ihrem Überschreiten bzw. Unterschreiten eines ersten Schwellwertes (TH0) unterschiedliche Auswahlprozeduren (P1, P2) realisiert werden, wobei jedoch innerhalb jeder Auswahlprozedur die Entscheidung zur Aktivierung einer von mehreren Antennen (A1, A2) der Funkempfangseinrichtung unabhängig von dem ersten Schwellwert (THO) erfolgt.

2. Verfahren nach Anspruch 1,
**dadurch gekennzeichnet,**
daß bei einer ursprünglichen Überschreitung bzw. Unterschreitung des ersten Schwellwerts (THO) und einer vorgebbaren Zahl nachfolgender Unterschreitungen bzw. Überschreitungen des ersten Schwellwerts (THO) die ursprünglich realisierte Auswahlprozedur (P1,P2) weiter realisiert wird.

3. Verfahren nach einem der Ansprüche 1 oder 2,
**dadurch gekennzeichnet,**
daß der zentrale Prozessor (DECT-C, TH-G) einer dem "Digital European Cordless Telecommunications" (DECT)-Standard entsprechenden Basisstation (FT) oder eines Mobilteils (PT) in der Weise ausgestaltete Verfahrensschritte durchführt, daß bei einem Überschreiten des ersten Schwellwerts (THO) das empfangene Signal auf einen Übertragungsfehler in einem der Prüfworte (CRC,A-CRC, X-CRC) überprüft wird, und daß bei Erkennen eines solchen Fehlers eine bisher nicht aktivierte Antenne (A2) der Funkempfangseinrichtung für den weiteren Emfang von Signalen aktiviert wird.

4. Verfahren nach einem der Ansprüche 1 oder 2,
**dadurch gekennzeichnet,**
daß der zentrale Prozessor (DECT-C, TH-G) einer dem "Digital European Cordless Telecommunications" (DECT)-Standard entsprechenden Basisstation (FT) oder eines Mobilteils (PT) in der Weise ausgestaltete Verfahrensschritte durchführt, daß bei einem Überschreiten des ersten Schwellwertes (TH0) das empfangene Signal auf den Empfang des Bursts überprüft wird, und daß bei Erkennen des Nichtempfangs des Bursts eine bisher nicht aktivierte Antenne (A2) der Funkempfangseinrichtung für den weiteren Empfang von Signalen aktiviert wird.

5. Verfahren nach einem der Ansprüche 1 oder 2,
**dadurch gekennzeichnet,**
daß der zentrale Prozessor (DECT-C, TH-G) einer dem "Digital European Cordless Telecommunications" (DECT)-Standard entsprechenden Basisstation (FT) oder eines Mobilteils (PT) in der Weise ausgestaltete Verfahrensschritte durchführt, daß bei einem Überschreiten des ersten Schwellwertes (TH0) die während aufeinanderfolgender Zeiträume (T1, T2,T3) gemessenen Feldstärkewerte (RSSI1,RSSI2,RSSI3) miteinander verglichen werden, und daß, sofern ein gemessener Feldstärkewert (RSSI2) unterhalb einer vorgebbaren Differenz unter einem unmittelbar zuvor gemessenen Feldstärkewert (RSSI1) liegt, eine bisher nicht aktivierte Antenne (A2) der Funkempfangseinrichtung für den weiteren Empfang von Signalen aktiviert wird.

6. Verfahren nach einem der Ansprüche 1 oder 2,
**dadurch gekennzeichnet,**
daß der zentrale Prozessor (DECT-C, TH-G) in der Weise ausgestaltete Verfahrensschritte durchführt, daß nach einem Unterschreiten des ersten Schwellwerts (TH0) in Abhängigkeit von in aufeinanderfolgenden Zeiträumen (T1,T2) gemessenen Feldstärken (RSSI1,RSSI2) für den dem Meßzeitraum (T2) folgenden Zeitraum (T3) eine von mehreren Antennen (A1,A2) für den Empfang der Signale aktiviert wird.

7. Verfahren nach Anspruch 6,
**dadurch gekennzeichnet,**
daß der zentrale Prozessor (DECT-C, TH-G) in der Weise ausgestalte Verfahrensschritte durchführt, daß sofern der im Meßzeitraum (T2) gemessene Feldstärkewert (RSSI2) größer als oder gleich dem im vorangegangenen Zeitraum (T1) gemessenen Feldstärkewert (RSSI1) ist, die im Meßzeitraum (T2) aktivierte Antenne (A1) für den dem Meßzeitraum (T2) folgenden Zeitraum (T3) aktiviert bleibt.

8. Verfahren nach Anspruch 6 oder 7,
**dadurch gekennzeichnet**,
daß zu jedem gemessenen Feldstärkewert (RSSI1,RSSI2) ein zweiter Schwellwert (TH2,TH3,TH21,TH27,TH28,TH39,TH40,TH41) gebildet wird, und daß in Abhängigkeit von dem zweiten Schwellwert (TH2) des dem Meßzeitraum (T2) vorangegangenen Zeitraums (T1) und in Abhängigkeit von dem im Meßzeitraum (T2) gemessenen Feldstärkewert (RSSI2) für den dem Meßzeitraum (T2) folgenden Zeitraum (T3) eine von mehreren Antennen (A1,A2) für den Empfang der Signale aktiviert wird.

9. Verfahren nach Anspruch 8,
**dadurch gekennzeichnet,**
daß nach einem Antennenwechsel (A1-A2) der erstmalig gebildete zweite Schwellwert (TH21,TH27,TH28,TH39,TH40,TH41) als Maximum zweier Werte gebildet wird, von denen der erste Wert gleich dem Feldstärkewert (RSSI20,RSSI26,RSSI27,RSSI38,RSSI39 RSSI40) ist, der als letzter Meßwert vor dem Antennenwechsel gemessen worden ist und von denen der zweite Wert gleich dem ersten nach dem Antennenwechsel gemessenen Feldststärkewert (RSSI21, RSSI27, RSSI28, RSSI39, RSSI40, RSSI41) abzüglich eines vorgebbaren Betrages (delta, Figur 2) ist.

10. Anordnung zur Antennenauswahlsteuerung in einer Funkempfangseinrichtung, insbesondere der Basisstation (FT) oder dem Mobilteil (PT) eines schnurlosen Telefons, mit einer Einrichtung (RSSI-C) zur Messung der Feldstärke empfangener Signale und einem zentralen Prozessor (DECT-C, TH-G), der aus den gemessen Feldstärken mindestens einen Schwellwert (THO, TH2, TH3, TH21, TH27, TH28, TH39, TH40, TH41) bildet,
**dadurch gekennzeichnet,**
daß dem zentralen Prozessor (DECT-C, TH-G) zugeordnete Mittel vorgesehen sind, die derart ausgebildet sind, daß in Abhängigkeit von gemessenen Feldstärkewerten (RSSI1) empfangener Signale und in Abhängigkeit von ihrem Überschreiten bzw. ihrem Unterschreiten eines ersten Schwellwertes (THO) unterschiedliche Auswahlprozeduren (P1, P2) realisiert werden, wobei jedoch während jeder Auswahlprozedur die Entscheidung zur Aktivierung einer von mehreren Antennen (A1, A2) der Funkempfangseinrichtung unabhängig von dem ersten Schwellwert (THO) erfolgt.

11. Anordnung nach Anspruch 10,
**dadurch gekennzeichnet,**
daß die dem Prozessor (DECT-C, TH-G) zugeordneten Mittel als ein Steuerprogramm (Softwaremittel) ausgebildet sind.

12. Anordnung nach Anspruch 10,
**dadurch gekennzeichnet,**
daß die dem Prozessor (DECT-C, TH-G) zugeordneten Mittel als Hardwaremittel (z. B. Komparatoren, Latches etc.) ausgebildet sind.

13. Anordnung nach einem der Ansprüche 10 bis 12,
**dadurch gekennzeichnet,**
daß die dem Prozessor (DECT-C, TH-G) zugeordneten Mittel derart ausgebildet sind, daß die in den Ansprüchen 2 bis 9 angegebenen Verfahrensschritte durchgeführt werden.

## Claims

1. A method for controlling antenna selection in a radio receiver, in particular the base station (FT) or the mobile unit (PT) of a cordless telephone, having a device (RSSI-C) for measuring the field strength of received signals and a central processor (DECT-C, TH-G), which forms at least one threshold value (H0, TH2, TH3, TH21, TH27, TH28, TH39, TH40, TH41) from the measured field strengths, characterized in that the central processor (DECT-C, TH-G) carries out method steps configured in such a way that different selection procedures (P1, P2) are realized as a function of measured field strength values (RSSI1) of received signals and as a function of their overshooting or undershooting of a first threshold value (TH0), it being the case, however, that within each selection procedure the decision to activate one of a plurality of antennas (A1, A2) of the radio receiver is taken independently of the first threshold value (TH0).

2. The method as claimed in claim 1, characterized in that the originally realized selection procedure (P1, P2) continues to be realized in the case of originally overshooting or undershooting the first threshold value (TH0) and in the case of a prescribable number of following instances of undershooting or overshooting the first threshold value (TH0).

3. The method according to one of claims 1 or 2, characterized in that the central processor (DECT-C, TH-G) of a base station (FT) corresponding to the "Digital European Cordless Telecommunications" (DECT) standard, or of a mobile unit (PT) carries out method steps configured in such a way that in the case of overshooting the first threshold value (TH0), the received signal is checked for a transmission error in one of the check words (CRC, A-CRC, X-CRC), and in that in the case of detection of such an error an antenna (A2), not previously activated, of the radio receiver is activated for further reception of signals.

4. The method as claimed in one of claims 1 or 2, characterized in that the central processor (DECT-C, TH-G) of a base station (FT) corresponding to the "Digital European Cordless Telecommunications" (DECT) standard, or of a mobile unit (PT) carries out method steps configured in such a way that in the case of overshooting the first threshold value (TH0), the received signal is checked for the reception of the burst, and in that in the case of detection of the non-reception of the burst an antenna (A2), not previously activated, of the radio receiver is activated for further reception of signals.

5. The method as claimed in one of claims 1 or 2, characterized in that the central processor (DECT-C, TB-G) of a base station (FT) corresponding to the "Digital European Cordless Telecommunications" (DECT) standard, or of a mobile unit (PT) carries out method steps configured in such a way that in the case of overshooting the first threshold value (TH0) the field strength values (RSSI1, RSSI2, RSSI3) measured during consecutive periods (T1, T2, T3) are compared with one another, and in that if a measured field strength value (RSSI2) lies below a prescribable difference below a field strength value (RSSI1) measured immediately before, an antenna (A2), not previously activated, of the radio receiver is activated for further reception of signals.

6. The method according to one of claims 1 or 2, characterized in that the central processor (DECT-C, TH-G) carries out method steps configured in such a way that after undershooting the first threshold value (TH0) one of a plurality of antennas (A1, A2) is activated for reception of the signals as a function of field strengths (RSSI1, RSSI2), measured in consecutive periods (T1, T2), for the period (T3) following the measuring period (T2).

7. The method as claimed in claim 6, characterized in that the central processor (DECT-C, TH-G) carries out method steps configured in such a way that if the field strength value (RSSI2) measured in the measuring period (T2) is greater than or equal to the field strength value (RSSI1) measured in the preceding period (T1), the antenna (A1) activated in the measuring period (T2) remains activated for the period (T3) following the measuring period (T2).

8. The method as claimed in claims 6 or 7, characterized in that a second threshold value (TH2, TH3, TH21, TH27, TH28, TH39, TH40, TH41) is formed relative to each measured field strength value (RSSI1, RSSI2), and in that one of a plurality of antennas (A1, A2) is activated for reception of signals for the period (T3) following the measuring period (T2), as a function of the second threshold value (TH2) of the period (T1) preceding the measuring period (T2) and as a function of the field strength value (RSSI2) measured in the measuring period (T2).

9. The method as claimed in claim 8, characterized in that after an antenna switch-over (A1-A2) the second threshold value (TH21, TH27, TH28, TH39, TH40, TH41) formed for the first time is formed as the maximum of two values of which the first value is equal to the field strength value (RSSI20, RSSI26, RSSI27, RSSI38, RSSI39, RSSI40), which has been measured as the last measured value before the antenna switch-over, and of which the second value is equal to the first field strength value (RSSI21, RSSI27, RSSI28, RSSI39, RSSI40, RSSI41) measured after the antenna switch-over minus a prescribable amount (delta, Fig.2).

10. An arrangement for controlling antenna selection in a radio receiver, in particular the base station (FT) or the mobile unit (PT) of a cordless telephone, having a device (RSSI-C) for measuring the field strength of received signals and a central processor (DECT-C, TH-G), which forms at least one threshold value (H0, TE2, TB3, TH21, TH27, TH28, TH39, TH40, TH41) from the measured field strengths, characterized in that means assigned to the central processor (DECT-C, TH-G) are provided which are constructed in such a way that different selection procedures (P1, P2) are realized as a function of measured field strength values (RSSI1) of received signals and as a function of their overshooting or undershooting of a first threshold value (TH0), it being the case, however, that during each selection procedure the decision to activate one of a plurality of antennas (A1, A2) of the radio receiver is taken independently of the first threshold value (TH0).

11. The arrangement as claimed in claim 10, characterized in that the means assigned to the processor (DECT-C, TH-G) are constructed as a control program (software means).

12. The arrangement as claimed in claim 10, characterized in that the means assigned to the processor (DECT-G, TH-G) are constructed as hardware means (for example, comparators, latches etc.).

13. The arrangement as claimed in one of claims 10 to 12, characterized in that the means assigned to the processor (DECT-C, TH-G) are constructed in such a way that the method steps specified in claims 2 to 9 are carried out.

## Revendications

1. Procédé de commande de la sélection d'antennes dans un dispositif de réception radio, notamment dans le poste de base (FT) ou dans la partie mobile (PT) d'un téléphone sans fil, comportant un dispositif (RSSI-C) de mesure de l'intensité de champ de signaux reçus et un processeur central (DECT-C, TH-G), qui, à partir des intensités de champ mesurées, forme au moins un seuil (TH0,TH2,TH3,TH21,TH27,TH28,TH39,TH40,TH41), caractérisé par le fait que le processeur central (DECT-C, TH-G) effectue des étapes opératoires conçues de telle sorte que l'on mette en oeuvre des procédures différentes de sélection (P1,P2) en fonction de valeurs mesurées (RSSI1) de l'intensité de champ de signaux reçus et en fonction du fait qu'elles sont, supérieures ou inférieures à un premier seuil (TH0), la décision d'activation d'une antenne parmi plusieurs antennes (A1,A2) du dispositif de réception radio étant prise cependant, au cours de chaque procédure de sélection, indépendamment du premier seuil (TH0).

2. Procédé suivant la revendication 1, caractérisé par le fait que dans le cas où, à l'origine, les valeurs mesurées sont supérieures ou inférieures au premier seuil (TH0) et où elles sont, un nombre prescrit de fois ensuite, inférieures ou supérieures au premier seuil (TH0), on met à nouveau en oeuvre la procédure de sélection (P1,P2) effectuée à l'origine.

3. Procédé suivant la revendication 1 ou 2, caractérisé par le fait que le processeur central (DECT-C, TH-G) d'un poste de base (FT), qui correspond à la norme "Digital European Cordless Telecommunications" (DECT), ou d'une partie mobile (RT) effectue des étapes opératoires telles que, lorsque les valeurs mesurées sont supérieures au premier seuil (TH0), on contrôle la présence, dans le signal reçu, d'une éventuelle erreur de transmission dans l'un des mots de contrôle (CRC, A-CRC, X-CRC), et que lorsque l'on a détecté une erreur de ce genre, on active une antenne (A2), non activée jusqu'alors, du dispositif de réception radio, pour la poursuite de la réception de signaux.

4. Procédé suivant l'une des revendications 1 ou 2, caractérisé par le fait que le processeur central (DECT-C, TH-G) d'un poste de base (FT), qui correspond à la norme "Digital European Cordless Telecommunications" (DECT), ou d'une partie mobile (PT) effectue des étapes opératoires telles que, lorsque les valeurs mesurées sont supérieures au premier seuil (TH0), on contrôle la réception, dans le signal reçu, de la salve, et que lorsque l'on a détecté la non-réception de la salve, on active une antenne (A2), jusqu'alors non activée, du dispositif de réception radio, pour la poursuite de la réception de signaux.

5. Procédé suivant l'une des revendications 1 ou 2, caractérisé par le fait que le processeur central (DECT-C, TH-G) d'un poste de base (FT), qui correspond à la norme "Digital European Cordless Telecommunications" (DECT), ou d'une partie mobile (PT) effectue des étapes opératoires telles que dans le cas où les valeurs mesurées sont supérieures au premier seuil (TH0), on compare entre elles les valeurs (RSSI1, RSSI2, RSSI3) d'intensité de champ, mesurées pendant des laps de temps successifs (T1,T2,T3), et que, dans la mesure où une valeur mesurée (RSSI2) de l'intensité de champ est inférieure, d'une différence pouvant être prédéterminée, à une valeur (RSSI1) de l'intensité de champ, mesurée juste auparavant, on active une antenne (A2), jusqu'alors non activée, du dispositif de réception radio pour la poursuite de la réception de signaux.

6. Procédé suivant l'une des revendications 1 ou 2, caractérisé par le fait que le processeur central (DECT-C, TH-G) effectue des étapes opératoires telles qu'après que les valeurs mesurées sont inférieures au premier seuil (TH0), on active une antenne parmi plusieurs antennes (A1,A2) pour la réception des signaux, pendant le laps de temps (T3) succédant au laps de temps de mesure (T2), en fonction d'intensités de champ (RSSI1, RSSI2) mesurées pendant des laps de temps successifs (T1,T2).

7. Procédé suivant la revendication 6, caractérisé par le fait que le processeur central (DECT-C, TH-G) effectue des étapes opératoires telles que, dans la mesure où la valeur (RSSI2) de l'intensité de champ, mesurée pendant le laps de temps de mesure (T2), est supérieure ou égale à la valeur (RSSI1) de l'intensité de champ, mesurée pendant le laps de temps précédent (T1), l'antenne (A1), activée pendant le laps de temps de mesure (T2), reste activée pendant le laps de temps (T3) qui succède au laps de temps de mesure (T2).

8. Procédé suivant la revendication 6 ou 7, caractérisé par le fait que l'on forme un second seuil (TH2, TH3,TH21,TH27,TH28,TH39,TH40,TH41) pour chaque valeur mesurée (RSSI1, RSSI2) de l'intensité de champ, et on active une antenne parmi plusieurs antennes (A1,A2) pour la réception des signaux, pendant le laps de temps (T3) succédant au laps de temps de mesure (T2), en fonction du second seuil (TH2) du laps de temps (T1), qui précède le laps de temps de mesure (T2), et en fonction de la valeur (RSSI2) de l'intensité de champ, mesurée pendant le laps de temps de mesure (T2).

9. Procédé suivant la revendication 8, caractérisé par le fait qu'après un changement d'antenne (A1-A2), on forme le second seuil (TH21,TH27,TH28,TH39, TH40,TH41) formé pour la première fois en tant que maximum de deux valeurs, dont la première est égale à la valeur (RSSI20,RSSI26,RSSI27,RSSI38,RSSI39,RSSI40) de l'intensité de champ, qui a été mesurée en tant que dernière valeur de mesure avant le changement d'antenne, et dont la seconde est égale à la première valeur (RSSI21,RSSI27,RSSI28, RSSI39,RSSI40,RSSI41) de l'intensité de champ, mesurée après le changement d'antenne, déduction faite d'une valeur absolue pouvant être prédéterminée (delta, figure 2).

10. Dispositif de commande de sélection d'antennes dans un dispositif de réception radio, notamment dans le poste de base (FT) ou dans la partie mobile (PT) d'un téléphone sans fil, comportant un dispositif (RSSI-C) de mesure de l'intensité de champ de signaux reçus et un processeur central (DECT-C, TH-G), qui, à partir des intensités de champ mesurées, forme au moins un seuil (TH0,TH2,TH3,TH21,TH27,TH28,TH39,T40,TH41),
caractérisé par le fait que
il est prévu des moyens associés au processeur central (DECT-C, TH-G), qui sont tels que des procédures différentes de sélection (P1,P2) sont mises en oeuvres en fonction de valeurs mesurées (RSSI1) de l'intensité de champ de signaux reçus et en fonction du fait qu'elles sont supérieures ou inférieures à un premier seuil (TH0), la décision d'activation d'une antenne parmi plusieurs antennes (A1,A2) du dispositif de réception radio s'effectuant cependant, au cours de chaque procédure de sélection, indépendamment du premier seuil (TH0).

11. Dispositif suivant la revendication 10, caractérisé par le fait que les moyens associés au processeur (DECT-C, TH-G) sont sous la forme d'un programme de commande (moyens logiciels).

12. Dispositif suivant la revendication 10, caractérisé par le fait que les moyens associés au processeur (DECT-C, TH-G) sont sous la forme de moyens matériels (par exemple comparateurs, circuits de verrouillage, etc.).

13. Dispositif suivant l'une des revendications 10 à 12, caractérisé par le fait que les moyens associés au processeur (DECT-C, TH-G) sont tels que les étapes opératoires indiquées aux revendications 2 à 9 soient effectuées.
